# EUROPÄISCHE PATENTSCHRIFT

(11) **EP 0 458 993 B1**
(45) Veröffentlichungstag und Bekanntmachung des Hinweises auf die Patenterteilung: **22.02.1995**
(21) Anmeldenummer: 90110083.4
(22) Anmeldetag: 28.05.1990
(51) Int. Cl.: F02P 5/155, G01L 23/22

(54) **Verfahren zur zylinderselektiven Klopfregelung von Brennkraftmaschinen**
Knock control on a cylinder-by-cylinder basis in an internal combustion engine
Réglage du cliquetis cylindre par cylindre dans un moteur à combustion interne

(43) Veröffentlichungstag der Anmeldung: 04.12.1991
(73) Patentinhaber: SIEMENS AKTIENGESELLSCHAFT, 80333 München (DE)
(72) Erfinder: Ziegler, Herbert, Dipl.-Ing. (FH), D-8440 Straubing (DE); Schindler, Peter, Dipl.-Ing. (FH), D-8300 Landshut (DE)

(56) Entgegenhaltungen:
- EP-A- 399 068
- EP-A- 0 175 915
- EP-A- 0 202 978
- EP-A- 0 346 799
- EP-A- 0 361 057

## Beschreibung

Die Erfindung betrifft ein Verfahren zur zylinderselektiven Klopfregelung von Brennkraftmaschinen nach dem Oberbegriff des Anspruchs 1 der EP-Anmeldung Nr. 89109254.6.

In der nicht vorveröffentlichten EP-Anmeldung Nr. 89109254.6 wird ein Klopfregel-Verfahren beschrieben, bei welchem das Ausgangssignal eines Klopfsensors nach Verstärkung und Aufbereitung (Bandpaß, Gleichrichter, Tiefpaß) einem Analog-Digital-Wandler (A/D-Wandler) zugeführt wird. Für jeden Zündzyklus wird durch Mittelwertbildung aus den drei größten Abtastwerten des Ausgangssignals des Klopfsensors innerhalb eines vorgebbaren Meßfensters ein Klopfwert gewonnen. Aus Geräuschwerten, welche durch gleitende Mittelwertbildung aus einer vorgegebenen Zahl von Klopfwerten berechnet werden, wird eine Klopfschwelle bestimmt. Durch Vergleich jedes Klopfwertes mit der Klopfschwelle (oder mit mehreren zu der ermittelten Klopfschwelle proportionalen Klopfschwellen) wird die Intensität jedes Klopfwertes ermittelt und dementsprechend eine Spätverstellung des Zündwinkels in unterschiedlich großen Schritten vorgenommen.

Das Eingangssignal eines A/D-Wandlers darf einen vorgegebenen Spannungsbereich nicht überschreiten, wenn er noch exakt in einen Digitalwert gewandelt werden soll.

Der Betrag des Sensorsignals eines Klopfsensors hängt von vielen Faktoren ab:
a) Motordrehzahl,
b) Motorlast,
c) Serienstreuung der Motoren,
d) Alterung des Motors,
e) Toleranzen des Klopfsensors,
f) Toleranzen des Kabelbaums,
g) Toleranzen der Auswerteelektronik, u.s.w.

Dadurch ergeben sich Signalpegel, die über den gesamten Eingangsspannungsbereich eines A/D-Wandlers streuen, darüber hinausgehen oder unterhalb der Empfindlichkeitsschwelle bleiben können. Aus diesem Grund ist es erforderlich, den Verstärkungsfaktor für das Sensorsignal zu variieren.

Ein Verfahren zur Steuerung des Verstärkungsfaktors für das Sensorsignal einer Klopfregelung von Brennkraftmaschinen ist aus der DE-OS 34 34 823 bekannt. Dort wird der Verstärkungsfak tor für das Sensorsignal entsprechend dem Kehrwert des verstärkten, aufbereiteten und innerhalb eines Meßfensters, in dem Klopfen ausdrücklich nicht auftreten soll, integrierten Mittelwert des Sensorsignals oder entsprechend einem in einem Kennfeld gespeicherten Wert gesteuert. Bei dieser Abhängigkeit des Verstärkungsfaktors von niedrigen Pegeln können Spitzenklopfwerte außerhalb des Eingangsbereichs des A/D-Wandlers liegen oder der Verstärkungsbereich, um dies auszuschließen, nicht voll ausgenutzt sein.

Aufgabe der Erfindung ist es, den Verstärkungsfaktor bei dem bekannten Verfahren zur zylinderselektiven Klopfregelung von Brennkraftmaschinen optimal zu bestimmen und damit eine empfindliche Klopferkennung und -regelung zu erreichen.

Diese Aufgabe wird durch die Merkmale von Anspruch 1 gelöst. Dabei wird gerade von den Spitzenwerten des Sensorsignals ausgegangen (was bei dem Verfahren nach der DE-OS 34 34 823 unbedingt vermieden werden soll), um deren Verstärkung so zu regeln, daß sie nahe der oberen Grenze des Eingangssignalbereiches des A/D-Wandlers zu liegen kommen. Damit werden die unter c) bis g) genannten Streuungen oder Toleranzen weitgehend kompensiert.

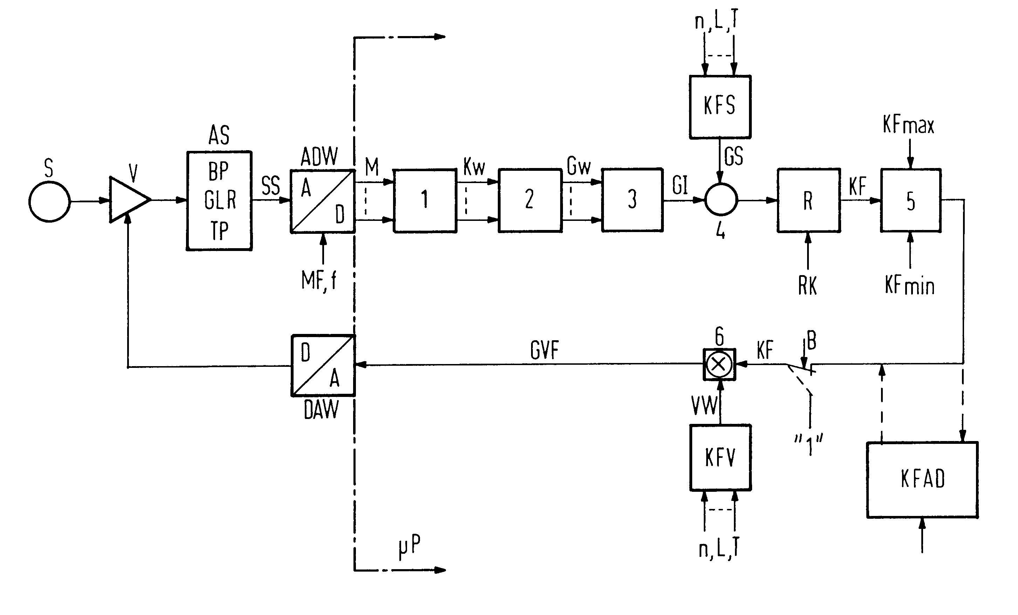

Weitere Einzelheiten der Erfindung werden anhand eines in der Zeichnung gezeigten schematischen Blockschaltbildes für das Verfahren und zugleich für eine Vorrichtung zur Durchführung dieses Verfahrens beschrieben.

Das Blockschaltbild zeigt einen an geeigneter Stelle eines Zylinders einer Brennkraftmaschine angeordneten Klopfsensor S (es können auch mehrere Klopfsensoren sein), dessen Ausgangssignal in einem Verstärker V verstärkt und in einer Aufbereitungsschaltung AS zu einem Sensorsignal SS aufbereitet wird. In der Aufbereitungsschaltung AS wird das Signal in einem Bandpaß BP gefiltert, in einem nachfolgenden Gleichrichter GLR gleichgerichtet und schließlich in einem Tiefpaßfilter TP geglättet. Dieses Sensorsignal SS wird in einem A/D-Wandler ADW digitalisiert und anschließend in einem Mikroprozessor uP weiterverarbeitet.

Der A/D-Wandler wird bei jeder Zündung während eines Meßfensters MF aktiviert und tastet in diesem Zeitraum mit vorgegebener Frequenz f das analoge Sensorsignal SS ab und wandelt es in digitale Abtastwerte M um.

Die weitere Verarbeitung erfolgt zylinderselektiv, d.h., für jeden Zylinder getrennt, im Mikroprozessor uP.

In einem Prozessorbereich 1 wird aus einer vorgegebenen Zahl der größten Abtastwerte innerhalb jedes Meßfensters ein Mittelwert gebildet, welcher als Klopfwert Kw für die vorausgegangene Zündung des betrachteten Zylinders gilt. Dieser Klopfwert ist der "gemittelte maximale Abtastwert" bei der auf eine Zündung folgenden Gemischverbrennung in einem Zylinder.

In einem Prozessorbereich 2 wird aus einer vorgegebenen Zahl der letzten aufeinanderfolgenden Klopfwerte Kw zylinderselektiv ein gleitender Mittelwert, der sogenannte Geräuschwert GW gebildet.

Bis hierher entspricht das beschriebene Verfahren dem bekannten Klopfregelverfahren, in welchem die Klopfwerte Kw und Geräuschwerte GW weiterverarbeitet werden.

Die zylinderselektiven Geräuschwerte GW bilden die Grundlage für die Ermittlung des Verstärkungsfaktors für die Verstärkung des Sensorsignals SS im Verstärker V.

In einem Prozessorbereich 3 wird aus den zylinderselektiven Geräuschwerten GW ein gemeinsamer Geräusch-Istwert GI gebildet. Dies geschieht dadurch, daß als Geräusch-Istwert GI der größte oder kleinste zylinderselektive oder sensorselektive Geräuschwert oder der Mittelwert aller zylinderselektiven Geräuschwerte bestimmt wird. Sensorselektive Geräuschwerte sind dabei jene, die aus Zylindern ermittelt wurden, welche einem bestimmten Sensor S zugeordnet sind. Die Geräuschwerte, welche für die Bildung des Geräusch-Istwertes GI am geeignetsten sind, werden in Versuchen ermittelt.

Der bestimmte Geräusch-Istwert GI wird in einer Vergleichsstufe 4 mit einem Geräusch-Sollwert GS verglichen, der einem Kennfeld KFS entnommen wird, in welchem die Sollwerte in Abhängigkeit von geräuschbestimmenden Motorparametern, wie Motordrehzahl n, Motorlast L, Motortemperatur T und dergleichen abgelegt sind.

Das Vergleichsergebnis, in diesem Beispiel das Verhältnis von Ist- und Sollwert GI/GS, wird einem nachfolgenden Regler R als Eingangsgröße zugeführt in diesem zu einem Korrektorfaktor KF verarbeitet. Der Regler in diesem Ausführungsbeispiel ist ein Integralregler, dessen Regelgeschwindigkeit durch eine vorgebbare Regelungskonstante RK veränderbar ist.

In einer auf den Regler R folgenden Begrenzungsstufe 5 wird der Korrekturfaktor KF auf einen Wertebereich innerhalb vorgebbarer Grenzwerte KFmax und KFmin begrenzt.

Der so begrenzte Korrekturfaktor KF wird anschließend einer Verknüpfungseinheit 6, in diesem Ausführungsbeispiel einem Multiplizierer, zugeführt, in welcher er mit einem Vorsteuerwert VW verknüpft, hier multipliziert, wird. Die Vorsteuerwerte VW sind, wie auch die Geräusch-Sollwerte GS, in einem Vorsteuerkennfeld KFV in Abhängigkeit der bereits genannten geräuschbestimmenden Motorparameter gespeichert.

Das Produkt aus Vorsteuerwert VW und Korrekturfaktor KF bildet den Gesamtverstärkungsfaktor GVF, welcher an einem Ausgang des Mikroprozessors uP erscheint, von einem Digital-AnalogWandler ADW in einen Analogwert gewandelt und dem Verstärker V als Steuergröße für den Verstärkungsfaktor zugeführt wird.

Bei bestimmten Betriebszuständen, beispielsweise bei Motorstillstand, bei Motorstart oder bei einem Fehler eines oder mehrerer Klopfsensoren, wird der Korrekturfaktor KF auf den Wert "1 gesetzt, d.h., es wird in diesen Betriebszuständen nur mit dem Vorsteuerwert VW verstärkt. Aus diesem Grund ist in der Leitung zwischen Begrenzungsstufe 5 und Verknüpfungseinheit 6 ein Umschalter gezeichnet, welcher bei den genannten Betriebszuständen B den Korrekturfaktor KF auf den Wert "1 setzt.

Für den Korrekturfaktor KF ist des weiteren ein motorbetriebspunktabhängiges Adaptionskennfeld KFAD vorgesehen, in welches in bekannter Weise bei bestimmten Betriebszuständen die ermittelten Korrekturfaktoren KF eingeschrieben und vorzugsweise aus diesem wieder entnommen werden.

## Patentansprüche

1. Verfahren zur zylinderselektiven Klopfregelung von Brennkraftmaschinen, mit folgenden Merkmalen:
das Sensorsignal (SS) wenigstens eines Klopfsensors (S) wird nach Verstärkung und Aufbereitung innerhalb eines für jeden Zündzyklus vorgebbaren Meßfensters (MF) mit vorgebbarer Frequenz (f) zur Bildung von Abtastwerten (M) abgetastet,
aus dem Mittelwert aus einer vorgebbaren Anzahl der größten Abtastwerte wird ein Klopfwert (Kw) bestimmt,
durch gleitende Mittelwertbildung wird aus einer vorgebbaren Zahl vorheriger Klopfwerte ein Geräuschwert (GW) ermittelt,
aus den zylinderselektiven Geräuschwerten (GW) wird ein Geräusch-Istwert (GI) gebildet,
aus einem Kennfeld (KFS) wird ein von wenigstens einem geräuschbestimmenden Motorparameter (n,L,T) abhängiger Geräusch-Sollwert (GS) ausgelesen,
die Differenz oder das Verhältnis (GI/GS) von Geräusch-Istwert (GI) und Geräusch-Sollwert (GS) wird in einem Regler (R) zu einem Korrekturfaktor (KF) verarbeitet, und
dieser Korrekturfaktor (KF) wird mit einem aus einem Vorsteuerkennfeld (KFV) ausgelesenen, von wenigstens einem geräuschbestimmenden Motorparameter (n,L,T) abhängigen Vorsteuerwert (VW) zu einem Gesamtverstärkungsfaktor (GVF) für das Sensorsignal (SS) verknüpft.

2. Verfahren nach Anspruch 1, dadurch gekennzeichnet,
daß der Geräusch-Istwert (GI) dem größten oder kleinsten zylinderselektiven Geräuschwert (GW) gleichgesetzt wird.

3. Verfahren nach Anspruch 1, dadurch gekennzeichnet,
daß der Geräusch-Istwert (GI) dem größten oder kleinsten sensorselektiven Geräuschwert (GW) gleichgesetzt wird.

4. Verfahren nach Anspruch 1,
dadurch gekennzeichnet,
daß der Geräusch-Istwert (GI) dem Mittelwert aller zylinderselektiven Geräuschwerte (GW) gleichgesetzt wird.

5. Verfahren nach Anspruch 1,
dadurch gekennzeichnet,
daß die Regelgeschwindigkeit des als Integralregler ausgebildeten Reglers (R) durch eine Regelungskonstante (RK) vorgebbar ist.

6. Verfahren nach Anspruch 1,
dadurch gekennzeichnet,
daß der Korrekturfaktor (KF) bei bestimmten Betriebszuständen (B) der Brennkraftmaschine auf den Wert "1 gesetzt wird.

7. Verfahren nach Anspruch 1,
dadurch gekennzeichnet,
daß der Korrekturfaktor (KF) auf einen Wertebereich innerhalb vorgegebener Grenzwerte (KFmin, KFmax) begrenzt wird.

8. Verfahren nach Anspruch 1,
dadurch gekennzeichnet,
daß der begrenzte Korrekturfaktor (KF) in einem adaptiven Kennfeld (KFAD) abgelegt und vorzugsweise aus diesem entnommen wird.

9. Verfahren nach Anspruch 1,
dadurch gekennzeichnet,
daß der Gesamtverstärkungsfaktor (GVF) das Produkt aus Vorsteuerwert (VW) und Korrekturfaktor (KF) ist.

## Claims

1. Method for knock control on a cylinder-by- cylinder basis in internal combustion engines, having the following features:
the sensor signal (SS) of at least one knock sensor (S) is sensed, after amplification and preprocessing at a predeterminable frequency
(f) within a measurement window (MF) which can be predetermined for each ignition cycle, in order to form sampled values (M),
a knock value (Kw) is determined from the mean value of a predeterminable number of the largest sampled values,
a noise value (GW) is determined from a predeterminable number of previous knock values by forming a sliding mean value,
an actual noise value (GI) is formed from the noise values (GW) for the individual cylinders, a set noise value (GS) which is dependent on at least one noise-determining engine parameter (n, L, T) is read out from a characteristic diagram (KFS),
the difference or the ratio (GI/GS) between the actual noise value (GI) and set noise value (GS) is processed in a controller (R) to form a correction factor (KF), and this correction factor (KF) is logically connected to a pilot control value (VW) which is read out of a pilot control characteristic diagram (KFV) and is dependent on at least one noise-determining engine parameter (n, L, T) to form a composite amplification factor (GVF) for the sensor signal (SS).

2. Method according to Claim 1, characterized in that the actual noise value (GI) is made the same as the largest or smallest noise value (GW) for an individual cylinder.

3. Method according to Claim 1, characterized in that the actual noise value (GI) is made the same as the largest or smallest noise value (GW) for an individual sensor.

4. Method according to Claim 1, characterized in that the actual noise value (GI) is made the same as the average value of all the noise values (GW) for the individual cylinders.

5. Method according to Claim 1, characterized in that the control speed of the controller (R) which is constructed as an integral controller can be predetermined by a control constant (RK).

6. Method according to Claim 1, characterized in that the correction factor (KF) under certain operating states (B) of the internal combustion engine is set to the value "1".

7. Method according to Claim 1, characterized in that the correction factor (KF) is limited to a range of values within predetermined limit values (KFmin, KFmax).

8. Method according to Claim 1, characterized in that the limited correction factor (KF) is stored in an adaptive characteristic diagram (KFAD) and preferably withdrawn therefrom.

9. Method according to Claim 1, characterized in that the composite amplification factor (GVF) is the product of the pilot control value (VW) and the correction factor (KF).

## Revendications

1. Procédé de régulation du cognement, cylindre par cylindre, de moteurs à combustion interne, présentant les caractéristiques suivantes :
le signal (SS) d'au moins un capteur de cognement (S) est échantillonné, après amplification et traitement à l'intérieur d'une fenêtre de mesure (MF) pouvant être prédéterminée pour chaque cycle d'allumage, avec une fréquence (f) pouvant être prédéterminée, pour la formation de valeurs d'échantillonnage (M),
une valeur de cognement (Kw) est déterminée à partir de la valeur moyenne d'un nombre pouvant être prédéterminé des valeurs maximales d'échantillonnage,
une valeur de bruit (GW) est déterminée en formant une valeur moyenne mobile, à partir d'un nombre pouvant être prédéterminé de valeurs antérieures de cognement,
une valeur réelle de bruit (GI) est formée à partir des valeurs de bruit (GW) cylindre par cylindre,
une valeur de consigne de bruit (GS), qui dépend d'au moins un paramètre (n,L,T) du moteur déterminant le bruit, est lue dans un ensemble de caractéristiques (KFS), la différence ou le rapport (GI/GS) entre la valeur réelle (GI) du bruit et la valeur de consigne (GS) du bruit est traitée dans un régulateur (R) pour former un facteur de correction (KF), et
ce facteur de correction (KF) est combiné à une valeur de commande pilote (VW), qui est lue dans un ensemble de caractéristiques de commande pilote (KFV) et dépend au moins d'un paramètre (n,L,T) du moteur déterminant le bruit, pour former un facteur d'amplification globale (GVF) pour le signal (SS) du catpeur.

2. Procédé suivant la revendication 1, caractérisé par le fait que la valeur réelle (GI) du bruit est rendue égale à la valeur de bruit maximale ou minimale (GW) cylindre par cylindre.

3. Procédé suivant la revendication 1, caractérisé par le fait que la valeur réelle (GI) du bruit est rendue égale à la valeur de bruit maximale ou minimale (GW) capteur par capteur.

4. Procédé suivant la revendication 1, caractérisé par le fait que la valeur réelle (GI) du bruit est rendue égale à la valeur moyenne de toutes les valeurs de bruit (GW) cylindre par cylindre.

5. Procédé suivant la revendication 1, caractérisé par le fait que la vitesse de régulation du régulateur (R) réalisé sous la forme d'un régulateur à action intégrale peut être prédéterminée par une constante de régulation (RK).

6. Procédé suivant la revendication 1, caractérisé par le fait que le facteur de correction (KF) est positionné sur la valeur "1 " pour des états de fonctionnement déterminés (B) du moteur à commutation interne.

7. Procédé suivant la revendication 1, caractérisé par le fait que le facteur de correction (KF) est limité à un intervalle de valeurs comprise entre des valeurs limites prédéterminées (KFmin, KFmax).

8. Procédé suivant la revendication 1, caractérisé par le fait que le facteur de correction limité (KF) est mémorisé dans un ensemble adaptatif de caractéristiques (KFAD) et est prélevé de préférence de ce champ de caractéristiques.

9. Procédé suivant la revendication 1, caractérisé par le fait que le facteur d'amplification global (GVF) est le produit de la valeur de commande pilote (VW) par le facteur de correction (KF).
